# EUROPÄISCHE PATENTSCHRIFT

(11) **EP 1 032 779 B1**
(45) Veröffentlichungstag und Bekanntmachung des Hinweises auf die Patenterteilung: **28.08.2002**
(21) Anmeldenummer: 99969774.1
(22) Anmeldetag: 29.09.1999
(51) Int. Cl.: F16H 1/28, F02C 7/36

(54) **PLANETENGETRIEBE**
PLANETARY GEAR
BOITE PLANETAIRE

(30) Priorität: 30.09.1998 DE 19844843
(43) Veröffentlichungstag der Anmeldung: 06.09.2000
(73) Patentinhaber: MTU Aero Engines GmbH, 80995 München (DE)
(72) Erfinder: STEGHERR, Rudolf, D-85221 Dachau (DE)
(74) Vertreter: Einsele, Rolf W.
(86) Internationale Anmeldenummer: DE9903121
(87) Internationale Veröffentlichungsnummer: WO00019124

(56) Entgegenhaltungen:
- EP-A- 0 388 207
- DE-A- 2 239 062
- GB-A- 804 223
- GB-A- 1 131 962
- PATENT ABSTRACTS OF JAPAN vol. 1996, no. 09, 30. September 1996 (1996-09-30) -& JP 08 135741 A (TSUBAKIMOTO CHAIN CO), 31. Mai 1996 (1996-05-31)

## Beschreibung

Die Erfindung betrifft ein Planetengetriebe in Zahnrad-Ausführung, mit einem Sonnenrad an einer ersten Welle, einem Planetenträger an einer zweiten Welle, einem Hohlrad am Getriebegehäuse oder an einer dritten Welle und Stufenplaneten mit je zwei verschieden großen, torsionsfest verbundenen Planetenrädern, wovon die kleineren mit dem Hohlrad, die größeren mit dem Sonnenrad kämmen, gemäß dem Oberbegriff des Patentanspruches 1.

Planetengetriebe mit Stufenplaneten sind bekannt und werden beispielsweise beim Rolls-Royce-Flugtriebwerk "Tyne" als Propellergetriebe verwendet. Gegenüber einem einstufigen Planetengetriebe mit einfachen Planeten, d.h. Rädern mit einem Wirkdurchmesser, welche mit dem Sonnen- und dem Hohlrad kämmen, läßt sich durch die Stufenplaneten-Bauweise mit mäßiger Vergrößerung des Getriebevolumens und etwas höherem Konstruktionsaufwand eine erhebliche Vergrößerung des Übersetzungsverhältnisses erreichen, wobei das Wellendrehmoment - weitestgehend - im gleichen Verhältnis steigt. Bei den bekannten Bauarten sind die zwei Räder der Stufenplaneten axial unmittelbar benachbart sowie zu einer integralen Einheit verbunden, d.h. meist aus einem Teil gefertigt.

Ein gattungsgemäße Planetengetriebe mit Stufenplaneten mit den Merkmalen des Oberbegriffs des Anspruchs 1 ist bereits aus der JP-A-08 135 741 bekannt.

Die drehbare Lagerung solcher integraler Stufenplaneten erfolgt üblicherweise über ein oder mehrere Gleitlager im Inneren jedes dieser Bauteile sowie über eine planetenträgerfeste, durch den Stufenplaneten hindurchführende Achse. Bei Wälzlagerung wird je ein Lager axial vor und hinter dem Stufenplaneten vorgesehen, da die radial größer bauenden Wälzlager im Inneren der Planetenräder, insbesondere der kleineren, meist nicht unterzubringen sind.

Projiziert man die beiden Verzahnungen eines Stufenplaneten - in axialer Richtung - in eine Ebene und analysiert man die Zahnl<räfte aus dem Eingriff mit dem Sonnen- und dem Hohlrad (1. und 2. Stufe) nach Größe und Richtung, so erkennt man, daß die beiden Zahnkräfte tendenziell in dieselbe Richtung weisen, wobei der spitze Winkel zwischen ihren Vektoren der Summe der beiden Eingriffswinkel (ca. 40° bis 50°) entspricht. Addiert man die beiden Zahnkräfte vektoriell, so ergibt sich eine Resultierende, welche deutlich größer ist, als jede der Einzelkräfte. Dies bedeutet konstruktiv, daß die Stufenplaneten-Bauweise zu hohen Lagerkräften führt, so daß die Tragfähigkeit der Stufenplanetenlager zu einem maßgeblichen Kriterium für die vom Getriebe übertragbare Leistung wird. Eine zusätzliche Lagerbelastung ergibt sich aus den auf die Stufenplaneten wirkenden, drehzahlabhängigen Zentrifugalkräften. In diesem Zusammenhang ist auch zu berücksichtigen, daß Propellergetriebe für eine Lebensdauer von beispielsweise 30 000 h auszulegen sind, was natürlich auch für die verbauten Wälzlager gilt.

Daher besteht die Aufgabe der Erfindung darin, Planetengetriebe mit Stufenplaneten in der Weise zu modifizieren, daß mit wenig vergrößertem Bauvolumen und wenig erhöhtem Bauaufwand (Teilezahl etc.) bei vorgegebenem Übersetzungsverhältnis eine erheblich höhere Leistung mit bestmöglichem Wirkungsgrad übertragen werden kann.

Diese Aufgabe wird durch die im Hauptanspruch gekennzeichneten Merkmale gelöst, in Verbindung mit den gattungsbildenden Merkmalen in dessen Oberbegriff.

Jedes Planetenrad ist als separate Einheit ausgeführt, welche beidseitig, d.h. axial, vor und hinter ihrer Mittelebene, im Planetenträger über jeweils mindestens ein hochbelastbares Wälzlager drehbar gelagert ist. Somit ergeben sich je Stufenplanet vier groß dimensionierbare, hochbelastbare Lagerstellen mit minimalen Reibungsverlusten. Dabei kann jede Lagerstelle mehrere Einzelwälzlager axial hintereinander aufweisen. Die Drehmomentübertragung vom großen zum kleinen Planetenrad eines Stufenplaneten erfolgt formschlüssig über eine zusätzliche, praktisch nur auf Torsion belastete Welle. Diese überbrückt den durch die Erfindung vergrößerten Axialabstand zwischen den gekoppelten, verschieden großen Planetenrädern. Somit kann man das erfindungsgemäße Getriebe auch als **Planetengetriebe mit Koppel-Stufenplaneten** bezeichnen.

In den Unteransprüchen sind bevorzugte Ausgestaltungen der Erfindung gekennzeichnet.

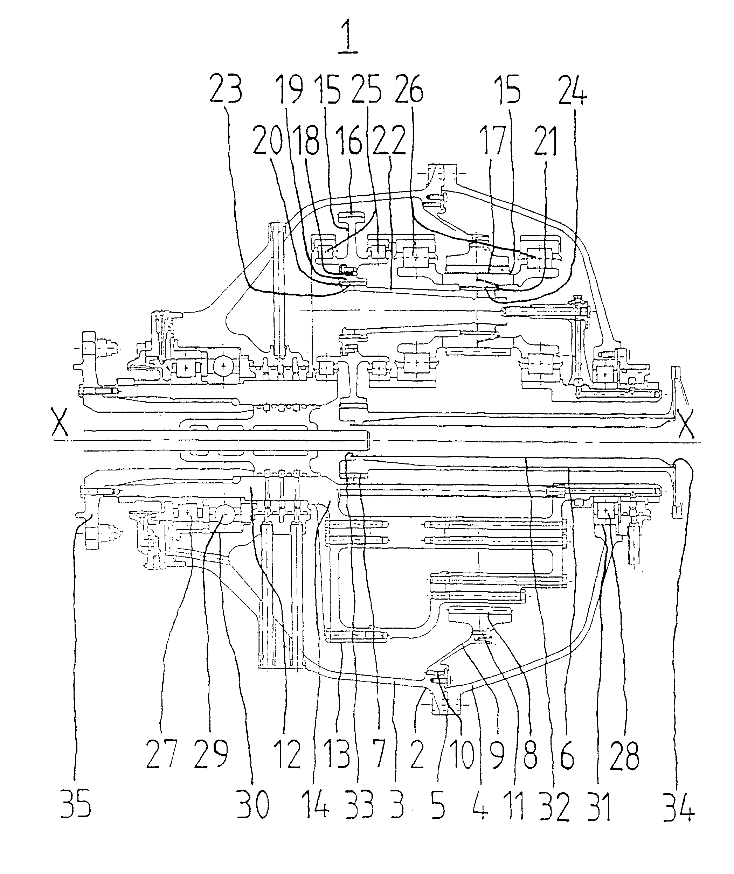

Die Erfindung wird anschließend anhand der Zeichnung näher erläutert. Diese zeigt einen Längsmittelschnitt durch ein Planetengetriebe, welches als Propellergetriebe eines Großflugzeuges vorgesehen ist.

Das Planetengetriebe 1 stellt ein zumindest großteils rotationssymmetrisches Gebilde mit einer horizontalen Längsmittelachse X dar. Der - hier nicht wiedergegebene - in Flugrichtung vorne angeordnete Propeller befände sich auf der linken Seite, die - ebenfalls nicht wiedergegebene - antreibende Wellenleistungs-Gasturbine bzw. deren Verdichtereinlauf auf der rechten Seite des Planetengetriebes 1. Insofern ist hier links vorne und rechts hinten. Der "normale" Leistungsfluß im Zugbetrieb verläuft somit von rechts nach links durch das Planetengetriebe 1. Die mechanischen Funktionselemente des ölgeschmierten Getriebes sind von einem abgedichteten Getriebegehäuse 2 umschlossen, in welches antriebsseitig (rechts) eine erste Welle 6 hineinführt, und aus welchem abtriebsseitig (links) eine zweite Welle 12 mit einem Propellerflansch 35 herausführt. Das Getriebegehäuse 2 besteht aus einer vorderen Schale 3 und einer hinteren Schale 4 mit einer Flanschverbindung 5 in einer zur Längsmittelachse X senkrechten Ebene. Die hintere Schale 4 ist hier als separates Bauteil dargestellt, sie könnte aber auch - zusammen mit dem Loslager 31 - in das Verdichtereinlaufgehäuse integriert, d.h. von diesem gebildet sein. Als einziges nicht rotierendes Zahnrad ist das innenverzahnte Hohlrad 8 torsionssteif mit dem Getriebegehäuse 2 verbunden und bildet so eine Momentenstütze für die rotierenden Getriebeelemente. Die spezielle Abstützung des Hohlrades 8 über einen sich nach vorne konisch erweiternden, dünnwandigen Träger 9 und zwei gerade/axiale Verzahnungen 10, 11 ergibt insgesamt eine gewisse radiale Nachgiebigkeit sowie eine minimale, kugelgelenkartige Beweglichkeit des Hohlrades 8 um seine Mitte bei uneingeschränkter Torsionssteifigkeit. Durch diese Anpassungsfähigkeit wird ein optimales Tragbild der Hohlradverzahnung - und der Gegenverzahnungen - erreicht, wodurch die übertragbare Leistung maximiert wird. Die Verzahnungen 10 und 11 sollen unter Torsionsbelastung möglichst keine Axialkräfte erzeugen, was am einfachsten mit Geradeverzahnungen erreicht wird. Im Hinblick auf eine größere Winkelbeweglichkeit könnte die Verzahnung 11 auch als Bogenverzahnung mit dem Hohlradmittelpunkt als Zentrum ausgeführt sein.

Für den Antrieb zweier gegenläufiger Propeller könnte das Hohlrad auch mit einer dritten, koaxialen Welle torsionsfest gekoppelt sein, was hier nicht dargestellt ist.

Speziell in der unteren Hälfte der Figur ist zu erkennen, daß der Planetenträger 13 mit der zweiten Welle 12 eine stabile, hochbelastbare Einheit 14 mit breiter Lagerbasis bildet. Die Wälzlagerung dieser Einheit 14 ist als Fest-Los-Lagerung ausgeführt, wobei das Festlager 30 im Bereich des propellerseitigen Gehäuseendes, das Lager 31 im Bereich des triebwerksseitigen Gehäuseendes sitzt. Das Festlager 30, welches auch die vom Propeller erzeugten Axialkräfte aufnehmen muß, ist als Kombination aus einem Rollenlager 27 und einem Kugellager 29, ggf. in Form eines sog. Vierpunktlagers, besonders stabil und ausfallsicher ausgeführt. Für das nur radial und weniger stark beanspruchte Loslager 31 ist ein Rollenlager 28 vorgesehen. Der käfigartige Planetenträger 13 ist als Schraubkonstruktion mit sich gegenseitig zentrierenden Bauelementen ausgeführt, so daß die von ihm getragenen Zahnräder, Lager und Wellen schnell und einfach ein- und ausgebaut werden können, z.B. zwecks Prüfung, Wartung oder Austausch.

Die das Sonnenrad 7 tragende, im Getriebebereich lagerlose erste Welle 6 weist die Besonderheit auf, daß sie mit einer Einrichtung zur Messung des Eingangsdrehmoments ausgestattet ist. Hierfür ist in ihrem Inneren ein Meßrohr 32 konzentrisch in der Weise installiert, daß sein eines Ende 33 drehfest mit der ersten Welle 6 verbunden, sein anderes Ende 34 zentriert und frei drehbar in der ersten Welle 6 geführt ist. Unter Last wird die erste Welle 6 tordiert, wohingegen das lastfreie Meßrohr 32 keine Verformung erfährt. Somit kann die Relativverdrehung zwischen der ersten Welle 6 und dem freien Ende 34 des Meßrohres 32 erfaßt und in einen Drehmomentwert umgerechnet werden. Dieser Meßwert wiederum kann nur zur Triebwerksregelung herangezogen werden, um eine Überlastung des Getriebes und des Propellers zu vermeiden. Das Sonnenrad 7 steht mit mehreren, beispielsweise drei, identischen Planetenrädern 16 in Eingriff, welche Elemente von sogenannten Stufenplaneten 15 sind. Jeder Stufenplanet 15 umfaßt zwei torsionssteif verbundene Planetenräder 16, 17 mit sehr unterschiedlichem Wirkdurchmeser/Teilkreisdurchmesser. Das Sonnenrad 7 kämmt mit den größeren Planetenrädern 16, wohingegen die kleineren Planetenräder 17 mit dem Hohlrad 8 kämmen. Nach diesem Prinzip lassen sich Übersetzungsverhältnisse von über 10:1 mit nur einem Sonnen- und nur einem Hohlrad realisieren.

Die Besonderheit liegt im vorliegenden Fall darin, daß jedes Planetenrad 16, 17 als separate Einheit ausgeführt und beiderseits, d.h. axial vor und hinter seiner Radmittelebene im Planetenträger 13 über hochbelastbare Wälzlager drehbar gelagert ist. Vorzugsweise handelt es sich um eine "schwimmende" Lagerung in symmetrischer Anordnung mit jeweils zwei gleichen Rollenlagern. Die Rollenlager sind im Hinblick auf einheitliche Lebensdauer an die Zahnkräfte angepaßt, weshalb die "ausgangsseitigen" Rollenlager 26 ersichtlich stärker dimensioniert sind, als die "eingangsseitigen" Rollenlager 25. Eine schwimmende Lagerung mit Radiallagern und geringem Axialspiel der Räder ist dadurch möglich, daß alle kämmenden Verzahnungen axialkraftfrei sind, d.h. keine Einfach- Schrägverzahnungen zur Anwendung kommen. Wälzlager haben gegenüber Gleitlagern die Vorteile, daß sie auch bei niedrigen Drehzahlen/Differenzdrehzahlen voll belastbar sind und allgemein mit höherem Wirkungsgrad, d.h. geringerer Verlustleistung, arbeiten, dies insbesondere bei tiefen Umgebungstemperaturen, wie sie in großen Flughöhen auftreten.

Eine ausgehend vom Leistungsfluß eher ungünstig erscheinende Besonderheit ist die Anordnung der Zahnradebenen im Planetengetriebe 1. Das Sonnenrad 7 und die größeren Planetenräder 16, welche hier die Eingangsstufe bilden, sind nicht zum Triebwerk sondern zum Propeller hin angeordnet (weiter links), wohingegen die kleineren Planetenräder 17 und das Hohlrad 8, welche die Ausgangsstufe bilden, näher beim Triebwerk (weiter rechts) positioniert sind. Diese Anordnung wurde im vorliegenden Fall bewußt gewählt, um das Planetengetriebe 1 mit sich zum Triebwerk hin (rechte Seite) verjüngender Außenkontur gestalten zu können, und dadurch die Einlaufverhältnisse für die Wellenleistungs-Gasturbine zu verbessern, d.h. eine günstigere Strömungsführung zu ermöglichen. Natürlich ist im Rahmen der Erfindung auch die gewohnte, umgekehrte Stufenanordnung möglich.

Die Ausführung jedes Planetenrades 16, 17 als separates, beidseitig wälzgelagertes Funktionselement erfordert innerhalb jedes Stufenplaneten 15 ein zusätzliches, mechanisches Koppelglied für die Drehmoment/Leistungsübertragung von Rad zu Rad. Zu diesem Zweck sind zusätzliche, torsionssteife Wellen 22 eingebaut, welche in Umfangsrichtung formschlüssig in die Planetenräder 16,17 eingreifen. Hierfür ist an jedem Wellenende eine Außen-Geradverzahnung 23, 24, in jedem Rad eine Innen-Geradverzahnung 20, 21 vorhanden. Die Verzahnungen 20, 23, 21, 24 sind axialkraftfrei und lassen, bei Passung mit etwas Spiel, auch minimale Winkelabweichungen, d.h. Radialverschiebungen der Räder, ohne Zwangskräfte zu. Somit werden die Wellen 20 praktisch ausschließlich auf Torsion belastet und können aus hochfestem Material relativ dünnwandig und leicht als Hohlwellen ausgeführt sein. Durch Einbezug dieser Wellenverzahnungen in das Ölschmiersystem des Getriebes läßt sich die Belastbarkeit noch steigern, bei weitgehender Verschleißfreiheit und zusätzlicher Dämpfung an den Zähnen.

Ein weiterer, leistungsoptimierender Vorteil wird dadurch erreicht, daß die Planetenräder 16, 17 vor Inbetriebnahme um kleine Winkelmaße gegeneinander verdreht und fixiert, d.h. eingestellt werden können, um ein optimales Tragen der kämmenden Verzahnungen zu erreichen. Hierfür ist mit jedem größeren Planetenrad 16 ein Mitnehmer 19 als Übertragungsglied zwischen Rad und Welle verbunden. Der Mitnehmer 19 trägt wellenseitig die bereits genannte Innen-Geradverzahnung 20. Als leistungsübertragende Verbindung zum Radkörper hin ist eine Schrägverzahnung 18 vorhanden. Somit wird durch axiale Verschiebung des Mitnehmers 19 relativ zum Radkörper zwangsläufig eine Relativverdrehung Rad/Mitnehmer und somit Rad/Welle erreicht. Die Fixierung der Axialposition erfolgt hier durch Verschraubung eines Flansches am Mitnehmer 19 gegen die Stirnseite des Radkörpers unter Zwischenlage einer oder mehrerer Scheiben mit angepaßter Dicke (Axialmaß). Bei kleinem Schrägungswinkel der Verzahnung 18 sind die im Betrieb auf die Verschraubung wirkenden Lasten nur gering.

Wie schon erwähnt, sollen alle kämmenden Verzahnungen mit wechselndem Zahneingriff - unabhängig von den stets mit allen Zähnen in Eingriff stehenden Wellenverzahnungen - axialkraftfrei arbeiten. Von den praktisch ausnahmslos verwendeten Evolventen-Verzahnungen eignen sich hierfür Geradverzahnungen, Kammgetriebe, Pfeilverzahnungen und Doppel-Schrägverzahnungen, wobei im Falle einer Pfeilverzahnung die Zähne an der "Pfeilspitze" direkt ineinander übergehen, im Falle der Doppel-Schrägverzahnung eine axiale Lücke zwischen den symmetrisch schrägstehenden Zähnen vorhanden ist, was fertigungstechnische Vorteile bringt. Dem Fachmann sind die betriebs- und fertigungstechnischen Vor- und Nachteile dieser Varianten geläufig.

Für andere Anwendungen eines erfindungsgemäßen Planetengetriebes kann der Leistungsfluß auch umgekehrt bzw. abgewandelt werden im Rahmen aller kinematischen Möglichkeiten, welche Ausführungen mit zwei oder drei koaxialen Wellen zulassen.

## Patentansprüche

1. Planetengetriebe in Zahnrad-Ausführung, insbesondere für den Einsatz als Drehzahl-Reduktionsgetriebe zwischen einer Wellenleistungs-Gasturbine und einem Propeller oder zwei gegenläufigen, koaxialen Propellern, mit einem Getriebegehäuse (2), mit einer ersten Welle (6) und mit einer dieser koaxial gegenüberliegenden zweiten Welle, mit einem torsionsfest mit dem Getriebegehäuse oder mit einer dritten, koaxialen Welle verbundenen Hohlrad (8), mit einem torsionsfest mit der ersten Welle verbundenen Sonnenrad (7), mit einem Planetenträger (13), welcher mit der zweiten Welle eine bauliche Einheit bildet, die an mindestens zwei axial beabstandeten Stellen drehbar gelagert ist, und mit mehreren gleichen, drehbar im Planetenträger gelagerten Stufenplaneter (15), von welchen jeder zwei torsionsfest verbundene, in ihrem Wirkdurchmesser/Teilkreisdurchmesser verschieden große Planetenräder (16, 17) aufweist, wobei alle größeren Planetenräder (16) nur mit dem Sonnenrad, alle kleineren Planetenräder (17) nur mit dem Hohlrad kämmen, wobei jedes Planetenrad (16, 17) als separate bauliche Einheit ausgeführt **dadurch gekennzeichnet, daß** jedes planetenrad (16, 17) beidseitig, d.h. axial vor und hinter seiner Mittelebene, jeweils mindestens ein hochbelastbares Wälzlager (25, 26) aufweist und daß die zwei Planetenräder (16, 17) jedes Stufenplaneten (15) über eine zusätzliche Welle (22) torsionsfest, axial und radial jedoch begrenzt relativbeweglich gekoppelt sind, wobei die Welle (22) mit jedem Planetenrad (16, 17) in Umfangsrichtung formschlüssig in Eingriff steht.

2. Planetengetriebe nach Anspruch 1, **dadurch gekennzeichnet, daß** alle Drehlager als geschmierte Wälzlager ausgeführt sind, daß jedes Planetenrad (16, 17) in zwei Rollenlagern (25, 26) symmetrisch gelagert ist, und daß die Einheit (14) aus Planetenträger (13) und zweiter Welle (12) eine Fest-Los-Lagerung mit einem Festlager (30) auf der einen und einem Loslager (31) auf der anderen Seite des Planetenträgers (13) aufweist, wobei das die Axialkräfte aufnehmende Festlager (30) aus einem Kugellager (29) und einem Rollenlager (27) in axial aneinandergrenzender Anordnung, das Loslager (31) aus einem Rollenlager (28) besteht.

3. Planetengetriebe nach Anspruch 1 oder 2, **dadurch gekennzelchnet,** daß seine Zahnräder (7, 8, 16, 17) über Geradverzahnungen oder Pfeilverzahnungen/Doppel-Schrägverzahnungen oder sogenannte Kammgetriebe in kämmendem Eingriff stehen, wobei es sich vorzugsweise um Evolventenverzahnungen handelt.

4. Planetengetriebe nach einem oder mehreren der Ansprüche 1 bis 3, **dadurch gekennzeichnet, daß** die die Planetenräder (16,17) torsionsfest koppelnden Wellen (22) je zwei Außen-Geradverzahnungen (23, 24), die Planetenräder (16, 17) je eine dazu mit kleinem Radialspiel passende Innen-Geradverzahnung (20, 21) aufweisen, wobei die Innen-Geradverzahnung (20) jedes größeren Planetenrades (16) in einen Mitnehmer (19) eingearbeitet ist, welcher über eine Schrägverzahnung (18) mit dem Planetenrad (16) in Eingriff steht und durch Verstellung seiner axialen Position relativ zum Planetenrad (16) in Umfangsrichtung verdrehbar ist.

5. Planetengetriebe nach einem oder mehreren der Ansprüche 1 bis 4, **dadurch gekennzeichnet, daß** das Hohlrad (8) über einen konischen Träger (9) mit je einer Verzahnung (10, 11) zum Getriebegehäuse (2) und zum Hohlrad (8) hin torsionssteif aber - in engen Grenzen - radial nachgiebig und kugelgelenkartig um seine Mitte schwenkbar gelagert ist.

6. Planetengetriebe nach einem oder mehreren der Ansprüche 1 bis 5, **dadurch gekennzeichnet, daß** in oder auf der ersten Welle (6) ein koaxiales Meßrohr (32) gelagert und an einem Ende (33) torsionsfest mit der Welle (6) verbunden ist, wobei die Relativtorsion zwischen dem losen Ende (34) des torsionsfreien Meßrohres (32) und der Welle (6) ein Maß für das Drehmoment darstellt.

7. Planetengetriebe nach einem oder mehreren der Ansprüche 1 bis 6, für die Leistungsübertragung mit Drehzahlreduktion zwischen einer Wellenleistungs-Gasturbine und einem Propeller, **dadurch gekennzeichnet, daß** die kleineren Planetenräder (17) und das Hohlrad (8) bezüglich ihrer axialen Lage näher bei der Gasturbine angeordnet sind, als die größeren Planetenräder (16) und das Sonnenrad (7).

8. Planetengetriebe nach Anspruch 5 und 7, **dadurch gekennzeichnet, daß** der konische Träger (9) des Hohlrades (8) sich nach vorne, d.h. zum Propeller hin, erweitert.

9. Planetengetriebe nach einem oder mehreren der Ansprüche 1 bis 8, **dadurch gekennzeichnet, daß** das Getriebegehäuse (2) aus zwei Schalen (3, 4) mit Flanschverbindung (5) besteht, wobei die Teilungsebene quer zu den Wellen (6, 12) steht.

10. Planetengetriebe nach Anspruch 7 und 9, **dadurch gekennzeichnet, daß** die hintere Schale (4) des Getriebegehäuses (2) in das Verdichtereinlaufgehäuse der Wellenleistungs-Gasturbine integriert ist.

## Claims

1. A planetary transmission of geared design, in particular for use as a speed reducing transmission between a shaft output gas turbine and a propeller or two counter-rotating coaxial propellers, with a transmission housing (2) with a first shaft (6) and with a second shaft coaxially opposite the first shaft (6), with an internal gear (8) connected in a torsion-proof manner to the transmission housing or to a third, coaxial shaft, with a sun gear (7) connected in a torsion-proof manner to the first shaft, with a planet carrier (13) forming with the second shaft one structural element which is mounted at least two axially separate points in such a manner that it can rotate, and with several identical stepped planet gears (15) mounted in the planet carrier in such a manner that they can rotate, each of which has two planet gears (16, 17) of different effective diameter/reference diameter connected in a torsion-proof manner, all the larger planet gears (16) engaging with the sun gear only and all the smaller planet gears (17) engaging with the internal gear only and each planet gear (16, 17) being designed as a separate structural element,
**characterised in that**
each planet gear (16, 17) has at least one high-load roller bearing (25, 26) on each side, i.e. axially in front of and behind its centre plane, and the two planet gears (16, 17) in each stepped planet gear are connected by means of an additional shaft (22) such that they are able to move in a restricted manner axially and radially in relation to one another but are nevertheless torsion-proof, the shaft (22) being positively peripherally engaged with each planet gear (16, 17).

2. A planetary transmission in accordance with claim 1,
**characterised in that**
all the rotational bearings are designed as lubricated roller bearings, that each planet gear (16, 17) is mounted symmetrically in two roller bearings (25, 26) and that a unit (14) comprising the planet carrier (13) and the second shaft (12) has a fixed/movable bearing with a fixed bearing (30) on one side of the planet carrier (13) and a movable bearing (31) on the other, the fixed bearing (30) accommodating the axial forces consisting of a ball bearing (29) and a roller bearing (27) in an axially adjacent arrangement and the movable bearing (31) consisting of a roller bearing (28).

3. A planetary transmission in accordance with claim 1 or 2,
**characterised in that**
its gears (7, 8, 16, 17) engage via spur-toothing or herringbone/double helical toothing or so-called "comb gears", the toothing preferably being involute toothing.

4. A planetary transmission in accordance with one or more of claims 1 to 3,
**characterised in that**
the shafts (22) which connect the planet gears (16, 17) in a torsion-free manner each have two externally spur toothed areas (23, 24) and the planet gears (16, 17) each have an internally spur toothed area (20, 21) which match the former areas with a small amount of radial play, the internal spur toothing (20) on each of the larger planet gears (16) being integrated in a driver (19) which engages with the planet gear (16) via a herringbone toothed area (18) and can be rotated by adjusting its axial position peripherally in relation to the planet gear (16).

5. A planetary transmission in accordance with one or more of claims 1 to 4,
**characterised in that**
the internal gear (8) is mounted on a conical carrier (9) with two toothed areas (10, 11), one facing the transmission housing (2) and the another facing the internal gear (8), in a torsion-resistant manner but nevertheless such that it has slight radial flexibility and is able to rotate in the manner of a ball-and-socket joint about its centre point.

6. A planetary transmission in accordance with one or more of claims 1 to 5,
**characterised in that**
a coaxial measuring tube (32) is mounted in or on the first shaft (6) with one end (33) connected to the shaft (6) in a torsion-proof manner, the relative torsion between the loose end (34) of the torsion-free measuring tube (32) and the shaft (6) representing a measure of torque.

7. A planetary transmission in accordance with one or more of claims 1 to 6, for power transfer with speed reduction between a shaft output gas turbine and a propeller,
**characterised in that**
the smaller planet gears (17) and the internal gear (8) are positioned nearer to the gas turbine in relation to their axial position than the larger planet gears (16) and the sun gear (7).

8. A planetary transmission in accordance with claim 5 and 7,
**characterised in that**
the conical carrier (9) of the internal gear (8) extends forwards, i.e. towards the propeller.

9. A planetary transmission in accordance with one or more of claims 1 to 8,
**characterised in that**
the transmission housing (2) consists of two shells (3, 4) with a flange connection (5) with the dividing plane running at right angles to the shafts (6, 12).

10. A planetary transmission in accordance with claims 7 and 9,
**characterised in that**
the rear shell (4) of the transmission housing (2) is integrated in the compressor intake housing of the shaft output gas turbine.

## Revendications

1. Mécanisme à planétaire en réalisation à pignons, en particulier pour emploi comme mécanisme réducteur de la vitesse de rotation entre une turbine à gaz à puissance sur l'arbre et une hélice ou deux hélices coaxiales à mouvement opposé, comportant un carter de mécanisme (2), ainsi qu'un premier arbre (6) et qu'un second arbre situé coaxialement en face de celui-ci, ainsi qu'une couronne (8), rigide en torsion, liée au carter de mécanisme ou à un troisième arbre coaxial, ainsi qu'un planétaire (7), rigide en torsion, lié au premier arbre, ainsi qu'une cage porte-satellites (13) qui forme avec le second arbre un sous-ensemble constructif, qui est porté, avec liberté de rotation, en au moins deux endroits distants l'un de l'autre selon la direction axiale, et que plusieurs satellites pluriétagés (15) identiques, portés, avec liberté de rotation, dans la cage porte-satellites, dont chacun présente deux grands satellites (16, 17) liés de façon rigide en torsion, de diamètre actif/diamètre primitif de dimension différente, tous les satellites les plus grands (16) engrenant uniquement avec le planétaire, tous les satellites les plus petits (17) engrenant uniquement avec la couronne, chaque satellite (16, 17) étant réalisé sous forme d'un sous-ensemble constructif distinct, **caractérisé par le fait que** chaque satellite (16, 17) présente, des deux côtés, c'est-à-dire, selon la direction axiale, devant et derrière son plan médian, au moins un palier à éléments roulants (25, 26) à forte capacité de charge et que les deux satellites (16, 17) de chaque satellite pluriétagé (15) sont couplés, par l'intermédiaire d'un arbre supplémentaire (22), avec rigidité en torsion, avec liberté relative de mouvement selon la direction axiale et selon la direction radiale, mais toutefois de façon limitée, l'arbre (22) venant en prise avec chaque satellite (16, 17) selon la direction périphérique par complémentarité de forme.

2. Mécanisme à planétaire selon la revendication 1, **caractérisé par le fait que** tous les paliers rotatifs sont réalisés sous forme de paliers à éléments roulants lubrifiés, que chaque satellite (16, 17) est porté symétriquement dans deux roulements à rouleaux (25, 26), et que le sous-ensemble (14) constitué de la cage porte-satellites (13) et du second arbre (12) présente une portée sans jeu - avec jeu comportant un palier sans jeu (30) de l'un des côtés de la cage porte-satellites (13) et un palier avec jeu (31) de l'autre côté, le palier sans jeu (30), qui reprend les forces axiales, étant constitué d'un roulement à billes (29) et d'un roulement à rouleaux (27) disposés se jouxtant l'un l'autre selon la direction axiale, le palier avec jeu (31) étant constitué d'un roulement à rouleaux (28).

3. Mécanisme à planétaire selon la revendication 1 ou 2, **caractérisé par le fait que** ses pignons (7, 8, 16, 17) engrènent par l'intermédiaire de dentures droites ou de dentures à chevrons/de dentures hélicoïdales doubles ou de mécanismes dits à engrènement, étant précisé qu'il s'agit de préférence de dentures à développante.

4. Mécanisme à planétaire selon une ou plusieurs des revendications 1 à 3, **caractérisé par le fait que** les arbres (22) qui couplent, avec rigidité en torsion, les satellites (16, 17) présentent chacun deux dentures droites extérieures (23, 24), que les satellites (16, 17) présentent chacun une denture droite intérieure (20, 21) qui s'y ajuste avec un petit jeu radial, la denture droite intérieure (20) de chaque satellite plus grand (16) étant usinée dans un entraîneur (19) qui vient en prise avec le satellite (16) par l'intermédiaire d'une denture hélicoïdale (18) et pouvant être entraîné en rotation selon la direction périphérique par déplacement de sa position axiale par rapport au satellite (16).

5. Mécanisme à planétaire selon une ou plusieurs des revendications 1 à 4, **caractérisé par le fait que** la couronne (8) est portée, par l'intermédiaire d'un support conique (9) comportant une denture (10, 11) pour le carter de mécanisme (2) et une pour la couronne (8), avec rigidité en torsion, mais pouvant céder radialement - dans des limites étroites - et pouvant pivoter autour de son milieu à la façon d'une articulation sphérique.

6. Mécanisme à planétaire selon une ou plusieurs des revendications 1 à 5, **caractérisé par le fait qu'**un tube de mesure coaxial (32) est porté dans ou sur le premier arbre (6) et qu'il est lié à une extrémité (33), avec rigidité en torsion, à l'arbre (6), la torsion relative entre l'extrémité avec jeu (34) du tube de mesure rigide en torsion (32) et l'arbre (6) représentant une mesure du couple.

7. Mécanisme à planétaire selon une ou plusieurs des revendications 1 à 6, pour la transmission de la puissance avec réduction de la vitesse de rotation entre une turbine à gaz à puissance sur l'arbre et une hélice, **caractérisé par le fait que**, concernant leur position axiale, les satellites plus petits (17) et la couronne (8) sont disposés plus près de la turbine à gaz que les satellites plus grands (16) et le planétaire (7).

8. Mécanisme à planétaire selon les revendications 5 et 7, **caractérisé par le fait que** le support conique (9) de la couronne (8) s'élargit vers l'avant, c'est-à-dire vers l'hélice.

9. Mécanisme à planétaire selon une ou plusieurs des revendications 1 à 8, **caractérisé par le fait que** le carter de mécanisme (2) est constitué de deux coques (3, 4) avec une liaison par flasque-bride (5), le plan de joint étant transversal aux arbres (6, 12).

10. Mécanisme à planétaire selon les revendications 7 et 9, **caractérisé par le fait que** la coque arrière (4) du carter de mécanisme (2) est intégrée dans le carter d'entrée de compresseur de la turbine à gaz à puissance sur l'arbre.
